(19) Europäisches Patentamt
European Patent Office
Office européen des brevets

(11) **EP 2 339 365 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(51) Int Cl.:
*G01S 7/40* *(2006.01)*     *G01S 7/52* *(2006.01)*
*G01S 13/93* *(2006.01)*     *G01S 15/93* *(2006.01)*
*G01S 13/86* *(2006.01)*

(21) Anmeldenummer: **10192368.8**

(22) Anmeldetag: **24.11.2010**

(54) **Verfahren und Vorrichtung zur Abschätzung der Übertragungscharakteristiken sowie zur Kompensation von Wandler-induzierten Merkmalsstreuungen**

Method and device for estimating the transmission characteristics of and compensating for transducer-induced variance in characteristics

Procédé et dispositif pour l'estimation des caractéristiques de transmission et pour la compensation des dispersions de caractéristiques induites par un transducteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2009 DE 102009054667**

(43) Veröffentlichungstag der Anmeldung:
**29.06.2011 Patentblatt 2011/26**

(73) Patentinhaber: **Robert Bosch GmbH 70442 Stuttgart (DE)**

(72) Erfinder: **Karl, Matthias 76275 Ettlingen (DE)**

(56) Entgegenhaltungen:
**DE-C1- 19 716 680**

**Beschreibung**

Technisches Gebiet

Die Erfindung betrifft das Gebiet der Positionserfassung durch reflexionsbasierte Verfahren und/oder zur Informationsübertragung . Insbesondere auf dem Gebiet der Kfz-Technik sind Sensoren und Erfassungsverfahren bekannt, die radar- oder ultraschallbasiert die Umgebung abtasten um so die Position und/oder Bewegung des Fahrzeugs relativ zu Objekten bzw. zu der Umgebung zu erfassen.

Stand der Technik

Aufgrund von Fertigungstoleranzen und der verwendeten Signalformen haben Sende- und Empfangseinrichtungen, die zur ultraschall- oder radarbasierten Abtastung verwendet werden, Abstrahlcharakteristika, die Toleranzen aufweisen. Insbesondere bei schmalbandigen Anwendungen ergeben sich starke Streuungen der Wandlercharakteristik. Eine weitere Fehlerquelle sind Einflüsse durch die Verbauung, wobei die Abstrahl- und Empfangseigenschaften der Sensoren ebenso von der Einbauumgebung abhängen, die anwendungsabhängig variieren kann. Darüber können die Übertragungsmerkmale des Mediums, in denen sich die ausgesandten Signalformen ausbreiten, ebenso, wie die Übertragungsmerkmale von eventuell im Ausbreitungspfad befindlichen Objekten variieren.

Wandlerbedingte Streuungen lassen sich nur durch hohen Kostenaufwand mittels hochpräziser Wandler verringern. Die durch den Einbau bedingten Fehler lassen sich nur durch einen individuellen und somit aufwändigen Kalibrierungsprozess, der zum Ende des Einbaus in der Anwendungsumgebung stattfindet, reduzieren. Merkmalsschwankungen, die während der Lebensdauer auftreten, können bei üblichen Systemen jedoch nicht ausgeglichen werden. Gleiches gilt für das Erkennen von weiteren zeitvarianten Einflüssen wie beispielsweise den des Klimas auf die Übertragungsmerkmale des Mediums, in dem sich die Signale ausbreiten.

In DE 197 16 680 C1 werden Übertragungsmerkmale in einer einmaligen Referenzmessung gemessen; mit der so ermittelten Übertragungsfunktion werden die anschließenden Messungen gefiltert, um so bewegte Ziele von unbewegten unterscheiden zu können.

Es ist daher eine Aufgabe der Erfindung, einen Mechanismus bzw. eine Vorgehensweise vorzusehen, mit der die Genauigkeit von Positions- und Bewegungserfassungen und/oder der Detektion der übertragenen Informationen erhöht werden kann, ohne dass kostenintensive Bauteile oder Herstellungsschritte notwendig sind.

Diese Aufgabe wird gelöst durch die Gegenstände der unabhängigen Ansprüche.

Das der Erfindung zugrunde liegende Konzept ist es, von Komponenten einer Übertragungscharakteristik eines Pulses auf andere Komponenten einer Übertragungscharakteristik zu schließen. Die anderen Komponenten betreffen die gleiche Übertragungscharakteristik, d.h. den den gleichen Puls, oder Komponenten der Übertragungscharakteristik eines weiteren Pulses, insbesondere Pulse, die von unterschiedlichen Wandlern gesendet und empfangen werden oder auch von dem gleichen Wandler nacheinander gesendet und empfangen werden. Ferner wird erfindungsgemäß eine Komponenten einer Übertragungscharakteristik eines Pulses auf eine Komponente dieser Übertragungscharakteristik abgebildet, die aus einer anderen Einflussgröße resultier, bsp. mittels Schätzung.

Komponenten einer Übertragungscharakteristik, die eine Übertragungseigenschaft widerspiegeln, werden erfindungsgemäß auf eine Komponente einer weiteren Übertragungscharakteristik übertragen, die die gleiche oder eine andere, daraus ableitbare Übertragungseigenschaft betrifft. In diesem Zusammenhang kann eine Übertragungseigenschaft einer Einflussgröße zugeordnet werden, wobei die Übertragungseigenschaft nicht unmittelbar einer signalbezogenen Größe entspricht sondern einen physikalischen Prozess wiedergibt, der mit der Einflussgröße verknüpft ist.

Als physikalischer Prozess wird insbesondere bezeichnet die Dämpfung innerhalb des Freiraum (abhängig von Temperatur, Druck, Luftfeuchtigkeit oder auch Strömung des Mediums), eine richtungsabhängige Dämpfung, die von der Richtcharakteristik des Wandlers bestimmt wird, Echoverzerrung durch als konstant anzunehmende Objekte, beispielsweise vom Wandler angestrahlte Verkleidungselemente oder von außen montierte Fahrzeugelemente (bsp. eine Fahrzeugkupplung), frequenzabhängige Dämpfungen und Phasendrehungen, d.h. der Frequenzverlauf des Wandlers, spektrale oder phasenbezogene Verzerrungen durch Reflexionen/Beugungen an einem Objekt, das sich in der Umgebung befindet (bsp. eine Wand), wobei diese Verzerrungen unterschieden werden können zwischen Verzerrungen durch die Oberflächenbeschaffenheit und das Material des Objekts oder Verzerrungen durch die Form des Objekts oder durch die Größe des Objekts oder durch die Anordnung des Objekts relativ zum Wandler oder Frequenzverschiebung, beispielsweise durch Dopplereffekt aufgrund einer Bewegung des Objekts.

Die erfindungsgemäße Verknüpfung kann gleichartige Komponenten verschiedener Übertragungscharakteristiken betreffen. Betrifft beispielsweise eine Komponente einer Übertragungscharakteristik eine Übertragungsdämpfung, die durch Lufttemperatur, Druck und Luftfeuchte definiert ist, so wird für eine weitere Übertragungscharakteristik (eines anderen Pulses) die gleiche Übertragungsdämpfung angenommen. Durch Vergleich der Gesamtdämpfungen der beiden Übertragungscharakteristika, wobei jedoch die darin enthaltenen Übertragungsdämpfungen für beide Übertragungscharakteristika als gleich angesehen werden, lässt sich eine weitere Komponente bestimmen, die einer anderen Einflussgröße zugeordnet ist, beispielsweise eine zusätzliche Dämpfung aufgrund unterschiedlicher Ausrichtung der Wandler und der Richtcharakteristika.

Die erfindungsgemäße Verknüpfung kann ferner verschiedenartige Komponenten verschiedener oder gleicher Übertragungscharakteristiken betreffen, wobei die Komponenten in einem abschätzbaren Zusammenhang stehen. Betrifft beispielsweise eine Komponente einer Übertragungscharakteristik eine Laufzeit, so kann hieraus die zugehörige Dämpfung ermittelt werden, da die Laufzeit über den damit verknüpften Objektabstand mit der Ausbreitungsdämpfung zusammenhängt. So kann aus einer Laufzeit eines Pulses (als eine Komponente einer Übertragungsfunktion, d.h. in Form einer Verzögerung) eine Dämpfung abgeschätzt werden, die eine Komponente der gleichen Übertragungscharakteristik des gleichen Pulses, einer anderen Übertragungscharakteristik nachfolgenden Pulses des gleichen Wandlers oder eines Pulses eines anderen Wandlers darstellt. Durch Vergleich der Gesamtdämpfungen (im allgemeinen: der Komponenten) lässt sich so beispielsweise eine weitere Dämpfungskomponente ermitteln, die das Ergebnis einer anderen Einflussgröße ist, beispielsweise zusätzliche Dämpfung durch Alterung.

Im allgemeinen wird davon ausgegangen, dass von einer Komponente einer Übertragungscharakteristik auf eine andere Komponente geschlossen werden kann. Die Komponenten sind entweder gleichartig, d.h. betreffen die selbe Einflussgröße (bsp. Dämpfung durch Oberflächenbeschaffenheit des reflektierenden Objekts), so dass eine Komponente einer Übertragungscharakteristik einer erfassten Komponente Übertragungscharakteristik gleichgesetzt wird oder eine Abbildung stattfindet. Andernfalls sind Komponenten verschiedenartig, d.h. betreffen unterschiedliche Komponenten, die jedoch in abschätzbarem Zusammenhang aufgrund physikalischer Entsprechungen stehen, bsp. bei einer erfassten Laufzeit, aus der eine Dämpfung abgeleitet wird, welche der Distanz entspricht, die die Laufzeit repräsentiert. Dann kann eine Komponente einer Übertragungscharakteristik einer abgeleiteten Komponente der Übertragungscharakteristik gleichgesetzt werden oder über eine Abbildung vorgesehen werden.

Für alle Wandler bzw. Übertragungscharakteristika oder Untergruppen hiervon kann eine Entsprechung der Komponenten im Sinne einer Identität angenommen werden.

Allerdings kann auch gezielt zusätzliche Information berücksichtigt werden, die einen Unterschied der Wandler bzw. Übertragungscharakteristika wieder geben. Beispielsweise kann ein Unterschied darin bestehen, dass ein Wandler zum Teil auf eine Fahrzeugkomponente abstrahlt, beispielsweise auf eine Anhängerkupplung, und ein anderer Wandler nicht. Dieser Unterschied spiegelt sich in einer vorab definierbaren Komponentendifferenz wieder, der beispielsweise eine Echokomponente wiedergibt. Beim Gleichsetzen der Komponenten wird diese Komponentendifferenz berücksichtigt, beispielsweise durch Subtraktion oder Addition mit einer der Komponenten. In gleicher Weise kann ein unterschiedlicher Ausrichtungswinkel von Wandlern vorbekannt sein. Auch wenn beide Wandler mit den gleichen Abstand auf das gleiche Objekt strahlen, ergibt sich einer Komponentendifferenz, die sich in einer Signalstärkedifferenz zwischen den Übertragungscharakteristika der verschieden ausgerichteten Wandlern widerspiegelt. Die Signalstärkedifferenz ist das Resultat der Richtcharakteristika der Wandler und der unterschiedlichen Ausrichtungswinkel zum Objekt. Die Komponentendifferenz kann ferner aus einer Komponente abgeleitet werden. In dem vorangehenden Beispiel kann als Komponente die Laufzeit dienen, die einen Abstand zu einem Objekt wiedergibt. Anhand des Abstands (und der Ausrichtung zueinander) können die unterschiedlichen Ausrichtungswinkel gegenüber dem Objekt, bsp. eine Wand, auf einfache Weise trigonometrisch berechnet werden. Da die Ausrichtungswinkel zum Objekt sowie die zugehörigen Dämpfungen bekannt sind, kann hieraus die Richtcharakteristik erfasst werden. Hierbei werden die Komponenten der unterschiedlichen Übertragungscharakteristika vorzugsweise auf unterschiedliche Weise verändert: während eine Komponente (Dämpfung) von der Einflussgröße "Winkel zum Objekt" im wesentlichen nicht abhängt, beispielsweise durch eine Ausrichtung der Hauptachse der Richtcharakteristik auf das Objekt (Wandler vollständig auf Objekt ausgerichtet), hängt die gleichartige Komponente einer anderen Übertragungscharakteristik (eines anderen Wandlers) stark von dieser Einflussgröße ab (Wandler schräg zu Objekt ausgerichtet). Die unterschiedliche Veränderung führt dazu, dass eine Komponente als Norm verwendet werden kann, da diese keine Abhängigkeit aufweist, während die andere Komponente im Vergleich hierzu in Abhängigkeit der Einflussgröße bestimmt werden kann. Bezogen auf die Dämpfung als Komponente und Winkel als Einflussgröße ergibt sich hierdurch die Richtcharakteristik für einen zum Objekt geneigten Wandler.

Durch das erfindungsgemäße Verfahren lassen sich insbesondere Fertigungstoleranzen oder Alterungsprozesse erkennen und kompensieren. Als Einflussgrößen können Material und/oder Geometrien des reflektierenden Objekts, die Geometrie des Objekts, Material des Objekts der Verbauort, und/oder Fertigungstoleranzen, Alterung, Beeinflussung des Verbauorts z.B. durch abnehmbare Fahrzeugteile, die in dem Schallausbreitungsweg stehen (bsp. Anhängerkupplung) oder eine variierende Beladung verwendet werden. Alles diese Einflussgrößen sind mit zumindest einer Komponente der Übertragungscharakteristik verknüpft. Als Komponente der Übertragungscharakteristik können beispielsweise Dämpfung, Laufzeit, Dopplerverschiebung, Phasenverschiebung, Änderungen des Phasen- und/oder Frequenzverlaufs, Breite des Impulses oder Echoverteilung angesehen werden.

Jeder Messsituation liegt zugrunde, dass die Veränderungen der ausgesandten Sendesignale auf den jeweiligen Übertragungswegen hin zu den jeweiligen Empfängern durch die den Übertragungsweg charakterisierenden Übertragungseigenschaften der Wandler, der Verbauumgebung der Wandler, der Übertragungsmedien zwischen Sender und Empfänger und/oder der in dem Übertragungsweg befindlichen die Signale reflektierenden Objekte beeinflusst werden. Der Übertragungsweg wird hierbei durch eine Übertragungscharakteristik wiedergegeben, wobei im allgemeinen eine Übertragungscharakteristik einer Übertragungsfunktion entspricht und umgekehrt.

Mit der Erfindung können diese Vielzahl der einzelnen Einflussgrößen und somit die zugehörigen Komponenten der Übertragungscharakteristik situationsabhängig separat oder zumindest trennbar (mittels eines Gleichungssystems) erfasst werden, um in darauf folgenden Situationen verbesserte Detektionsergebnisse dadurch zu erzielen, dass die sich nicht oder sich nach bekannten Regeln verändernden Einflussgrößen aus der Vielzahl der Unbekannten des Gleichungssystems eliminiert werden um die sich unbekannter Weise verändernden Einflussgrößen und somit die die Szene charakterisierenden Größen präziser bestimmen zu können.

Das folgende Beispiel dient zur Veranschaulichung eines Aspekts der Erfindung. Angenommen, die variablen Eigenschaften einer Szene (= Übertragungssituation) sind einerseits die Stärke der Reflektivität eines Objects und andererseits die klimaabhängige Stärke der Dämpfung des Ausbreitungsmediums. Wäre die Reflektivität eines Objects bekannt, könnte beispielsweise entschieden werden, ob das Objekt bei Auftreffen auf das Fahrzeug zu Schäden führt oder nicht. Ein schallweicher Haufen Schneematsch kann beispielsweise leicht überfahren werden, während vor einem schallharter Eisklumpen oder sogar einem größeren Stein gebremst werden sollte.

Die Erfindung ermöglicht es in diesem Fall, während der Annäherung an den Schneehaufen die Reflektivität präzise zu bestimmen, um die Fahrdynamik des Systems (Lenkung, Gas, Bremse, Info an den Fahrer) entsprechend zu beeinflussen. Ebenso, wie die Reflektivität des Objects von der Materialart abhängt, variiert in diesem einfachen Beispiel die Dämpfung des Ausbreitungsmediums abhängig von seiner materiellen Zusammensetzung, der Temperatur und dem Luftdruck. Bei Systemen gemäß dem Stand der Technik kann die Reflektivität eines Objects nur unscharf vorher gesagt werden. Erfindungsgemäß werden anhand von bereits im Vorfeld bekannten Gesetzmäßigkeiten aus den sich während der Annäherung an das Objekt verändernden Echolautstärken auf die drei das Medium charakterisierenden Größen "Feuchte", "Temperatur" und "Luftdruck" geschlossen, indem eine vorbekannte Abbildung bzw. Abschätzung vorgesehen wird. Diese sieht vor, dass sich bei Fahrt direkt auf das Objekt zu die Reflektivität des Objektes nicht ändert. Wurde das aus einer Reihe von Messwerten bestimmte Modell des Übertragungsmediums genau bestimmt, das die Dämpfung des Ausbreitungsmediums als ein Teil der Übertragungscharakteristik wiedergibt, kann bei den nachfolgenden Messungen die andere Komponente der Übertragungscharakteristik, d.h. die Reflektivität des Objects genau bestimmt werden, um z.B. die o.g. Beeinflussung der Fahrdynamik durchzuführen oder auch nur um bei folgenden Abtastungen der Umgebung die bekannten, als konstant angenommenen Komponenten der Übertragungscharakteristik zu berücksichtigen.

Zur Ausführung der Erfindung wird die Umgebung und somit auch gegebenenfalls dort vorhandene Objekte abgetastet. Aus der erfassten Umgebung, die gemäß einer Ausführungsvariante auch die nähere Umgebung, das heißt gegebenenfalls Befestigungseinrichtungen des Sensors und Ähnliches umfasst, wird gemäß der Erfindung auf eine mindestens eine Komponente des Übertragungskanals (oder eine Kombination mehrerer Komponenten) geschlossen, die einer Einflussgröße zugeordnet ist, die von der Umgebung gebildet wird (bsp. Dämpfung durch das Medium). Die Komponente des Übertragungskanals kennzeichnet die Übertragungscharakteristik, d.h. die Umgebungs-Übertragungsfunktion, so dass die Umgebungs-Übertragungsfunktion die mindestens eine Eigenschaft des Übertragungsmediums widerspiegelt.

Gemäß einer spezifischen Ausführungsform der Erfindung wird aus der erfassten Umgebung (d.h. aus zumindest einer ermittelten Komponente der Übertragungscharakteristik) auf eine Situation geschlossen, bsp. Fahrzeug steht vor einer Wand. Dies lässt sich beispielsweise aus der Laufzeit und der Verbreiterung des Pulses schließen. Der Zusammenhang zwischen Übertragungscharakteristik oder Komponenten hiervon und erfasster Umgebung sich ergibt aus einer vorab gespeicherten bzw. vordefinierten Zuordnung zwischen einer Umgebung bzw. einer Umgebungskategorie und einer dort üblicherweise anzutreffenden Umgebungs-Übertragungsfunktion. Die Übertragungseigenschaft wird daher ausgehend von ermittelten Komponenten und dem vorbekannten Zusammenhang geschätzt. Die geschätzte Übertragungscharakteristik kann mit der gemessenen bzw. tatsächlich erfassten Übertragungscharakteristik ermittelt werden, um so einzelne Komponenten der zu erfassenden Übertragungscharakteristik zu ermitteln. Beispielsweise kann so eine Einbaudämpfung der Wandler oder auch eine Richtcharakteristik eines Wandlers ermittelt werden. Eine weitere Situation ist die Ausrichtung der Wandler auf eine freies Feld. Dies wird durch fehlende Reflektionen insbesondere bei längeren Laufzeiten (bsp. entsprechend > 1 m) erfasst. Ergeben sich trotzdem Komponenten der Übertragungscharakteristik, die bsp. eine frühzeitige Reflexion wiedergeben (bsp. entsprechend > 1 m), so kann darauf geschlossen werden, dass diese durch die Einbauumgebung oder durch Übersprechen von einem (im wesentlichen gleichzeitig oder kurz danach oder davor) angesteuerten, benachbarten Wandler erzeugt werden. Die frühzeitige Reflexionskomponente kann dann im weiteren kompensiert werden, um dann Objekte, die sich in der Nähe des Wandlers befinden, in Ihrer Reflexionsstärke korrekt darzustellen.

In einem weiteren veranschaulichenden Beispiel befindet sich mehrere sendende und mehrere empfangende Elektro-Akustik-Wandler, welche als Ultraschallwandler vorgesehen sind, an einer Stoßstange eines Kraftfahrzeugs. Je nach realisiertem Sende- und Empfangszeitrhythmus und technischer Auslegung können die Elektro-Akustik- Wandler wahlweise nur zum Aussenden oder nur zum Empfangen oder abwechselnd zum Senden und anschließenden Empfangen akustischer Signale verwendet werden. In diesem Beispiel steht das Kraftfahrzeug unmittelbar vor einer Wand, beispielsweise vor einer Garagenwand mit einem Abstand von 50 cm. Diese Situation ist bei Systemen mit räumlich am Fahrzeug verteilten abstandsmessenden Sensoren relativ einfach durch ein die empfangenen Ultraschallsignale auswertendes System anhand der Echolaufzeiten der verschiedenen Sender-Empfänger-Paarungen erkennbar und kann daher einfach auf eine typische, abzuschätzende Übertragungscharakteristik abgebildet werden.

Prinzipiell gilt, dass die Vielzahl der einzelnen, den jeweilige Übertragungsweg einer Sender-Empfänger-Paarungen charakterisierenden Einflussgrößen insbesondere in statischen Szenen nicht bezüglich der einzelnen Einflussgrößen analysiert werden. Äquivalent wie im oben beschriebenen vereinfachten Beispiel können diese Einflussgrößen Durch Auswertung der Messreihen in sich bewegenden Szenen bestimmt werden. Bewegt sich im konkreten Beispiel nun das Fahrzeug relativ zu Wand, so verändern sich die Ausbreitungsbedingungen verschiedener Sender-Empfänger-Paarungen unterschiedlich. Beispielsweise hat die Richtcharakteristik der Sensoren, die sich entlang ihrer Hauptstrahlrichtung auf ein Objekt, wie der Wand zu bewegen, ebenso keinen Einfluss wie die Reflektivität oder Form des sich nicht relativ bewegenden Objekts auch keinen Einfluss auf die Signalveränderungen einer Sender-Empfänger-Paarung. Bei diesem Szenenelement kann daher wie oben beschrieben die Reflektivität, die Objektform und die die Übertragungsfunktion des Mediums charakterisierenden Klimagrößen bestimmt werden. Sind diese Klimagrößen bekannt, können die Eigenschaften anderer Sender-Empfänger-Paarungen - wie beispielsweise die Richtcharakteristik oder/und Abhängigkeit von der jeweils verwendeten Signalfrequenz bestimmt werden, da einige Einflussgrößen wie Objektform, Reflektivität, Mediumsdämpfung der Szene bereits bekannt sind.

Eine weitere Möglichkeit zur Erfassung der Situation ist eine Erfassung mittels Videokamera, wobei es hier genügt, dass zumindest der Abstand erfasst wird (beispielsweise mittels der Fokusiereinrichtung der Kamera oder durch Bildverarbeitung und Objekterkennung) sowie die Wand als zusammenhängende, reflektierende Fläche als vor dem Sensor befindliches Schall hindernis. Die von der Videokamera erfasste Situation wird abgebildet auf eine geschätzte Übertragungscharakteristik, die mit der von den Ultraschallwandlern ermittelten Übertragungscharakteristik verglichen wird, um so einzelne Komponenten der Übertragungscharakteristik der Wandler zu ermitteln.

Die Erfindung sieht vor, dass aus einer Komponente der Übertragungscharakteristik auf eine weitere Komponente der Übertragungscharakteristik des gleichen oder eines anderen Pulses geschlossen wird. Die Verknüpfung zwischen den Komponenten kann darin bestehen, dass die zugehörige Einflussgröße als konstant angenommen wird, bsp. Temperatur, Luftdruck und Luftfeuchte. Eine spezifische Ausführungsform sieht eine Verknüpfung mittels einer Datenbank, d.h. mittels vorbekannter (und dort gespeicherter) Umgebungsszenarien vor. Die zutreffende Umgebungssituation wird ausgewählt anhand mindestens einer erfassten Komponente der Übertragungscharakteristik. Die Datenbank bildet die Umgebungssituation auf eine dort gespeicherte und mit dieser Umgebungssituation verknüpfte Übertragungsfunktion bzw. einzelne Komponenten der Übertragungsfunktion ab. Die so abgebildeten bzw. geschätzten Komponenten werden mit gemessenen Komponenten bzw. gemessener Übertragungscharakteristik verglichen, um so auf (andere) Komponenten der gemessenen Übertragungscharakteristik schließen zu können. Daher sieht die Erfindung in dieser spezifischen Ausführungsform vor, zunächst die Umgebung an sich zu erfassen und aus der Art der Umgebung entweder durch eine vorgebene Verknüpfung auf eine für diese Art der Umgebung typische Übertragungscharakteristik zu schließen, oder eine Übertragungscharakteristik anhand der erfassten Umgebungsmerkmale mittels einer Näherung (anstatt der Datenbank) zu schätzen. Die Umgebung bzw. die Art der Umgebung oder Objekte hierin können optisch erfasst werden mittels einer Videokamera, oder kann mittels Ultraschall- oder Mikrowellenabtastung, das heißt mittels eines Sensors erfasst werden. Hierbei kann der Wandler derjenige sein, dessen Komponente der Übertragungscharakteristik abzuschätzen ist, oder kann ein Wandler sein, der sich von dem Wandler unterscheidet, dessen Komponente der Übertragungscharakteristik abgeschätzt werden soll.

Die Erfindung sieht vor, eine Übertragungscharakteristik eines Transceivers abzuschätzen, der auf Ultraschall- oder Mikrowellenbasis arbeiten kann. Der Transceiver umfasst grundsätzlich mindestens eine Sende- und eine Empfangseinheit, wobei diese auch zusammenfallen können, wobei beispielsweise bei einem Ultraschallwandler dieser zunächst mit einer geeigneten Ansteuerung angeregt wird und daraufhin, nachdem die dadurch ausgesandte Schallwelle wieder nach der Reflexion am Wandler angelangt ist, diesen mechanisch anregt, um so ein Empfangssignal vorzusehen. Als Transceiver kann auch eine Gruppe bzw. eine Mehrzahl von Wandlern bzw. Sende- und/oder Empfangselemente bezeichnet werden. Grundsätzlich arbeiten die Transceiver auf Ultraschallbasis, jedoch können auch Mikrowellensender/Empfänger vorgesehen werden, um als Radar-gestützter Wandler zunächst eine Radarwelle in die Umgebung abzusenden und mittels einem Empfänger wieder aufzunehmen. Hierbei kann ein und dieselbe Antenne verwendet werden (oder eine Mehrzahl hiervon) oder es können unterschiedliche Antennen zum Empfang und Senden verwendet werden.

Anhand der Komponenten der Übertragungscharakteristik wird die tatsächliche Übertragungscharakteristik des Transceivers (bzw. Komponenten hiervon) selbst vorgesehen. Als Komponenten der Übertragungscharakteristik (die im allgemeinen den gesamten Wandlungsweg und Übertragungsweg des Pulses wiedergibt), die dem Transceiver als Einflussgröße zugeordnet sind, werden Komponenten bezeichnet, die sich durch Wandlung des elektrischen Sendesignals in akustische oder elektromagnetische Schwingungen ergibt, (im Zeitbereich) gefaltet oder (im Frequenzbereich) multipliziert mit der Übertragungsfunktion, die sich durch Wandlung der akustischen oder elektromagnetischen Schwingungen in ein Empfangssignal ergibt. Somit umgreifen die dem Transceivers zugehörigen Komponenten sämtliche Frequenzabhängigkeiten oder Signalveränderungen, die durch den Transceiver beim Wandeln, das heißt beim Senden oder Empfangen entstehen, umgreifen jedoch nicht Übertragungsmerkmale der Umgebung, die durch andere Komponenten der Übertragungscharakteristik wiedergegeben werden. Die ermittelten Komponenten des Wandler werden zur Kompensation der (folgenden) Übertragungscharakteristik verwendet, bsp. durch Inversion der Komponenten, bevor diese mit einer erfassten Übertragungscharakteristik kombiniert werden.

Mit anderen Worten werden die tatsächliche Komponenten der Übertragungscharakteristik, die durch den Wandler verursacht werden, , und die durch Einbau oder Exemplarstreuung von einer Norm abweichen können, erfindungsgemäß vorgesehen, indem zum einen die Komponenten der Übertragungsfunktion, welche Propagation und Reflexion innerhalb der Umgebung darstellt, anhand anderer Komponenten der Übertragungscharakteristik durch Vergleich mit der erfassten Gesamt-Übertragungscharakteristik ermittelt.

Die Komponente der Übertragungsfunktion (d.h. der Übertragungscharakteristik), die dem Wandler zugehört aus der gemessenen Gesamtübertragungsfunktion "extrahiert" bzw. rausgelöst, indem die Komponenten der Übertragungscharakteristik, die der Umgebung zugeordnet sind, geschätzt werden. Um die Komponente der Übertragungscharakteristik des Transceivers aus der gemessenen Gesamtübertragungsfunktion (= Verhältnis zwischen Empfangspuls und Sendepuls) zu berechnen, wird erfindungsgemäß vorgesehen, die geschätzte(n) Komponente(n), die Einflussgrößen der Umgebung betreffen, zu invertieren, und mit der gemessenen Gesamtübertragungsfunktion (Verhältnis von Empfangspuls zu Sendepuls) zu kombinieren, um aus der gemessenen Gesamtübertragungsfunktion die umgebungsbedingten Komponenten zu entfernen und so die verbleibenden Komponenten, das heißt die spezifische Übertragungscharakteristik des Transceivers, vorzusehen.

Diesem erfindungsgemäßen Konzept liegt ein Kanalmodell zugrunde, demnach sich die gemessene Gesamt-Übertragungscharakteristik (Verhältnis zwischen Empfangspuls und Sendepuls) die folgenden beiden Komponenten umfasst: Komponenten der Übertragungsfunktion, die dem Transceiver zugeordnet sind (= resultierend aus Einflussgrößen des Wandlers), und Komponenten der Gesamt-Übertragungsfunktion, die durch die Umgebung vorgesehen werden (= resultierend aus Einflussgrößen der Umgebung).

Dieses Modell kann im Zeitbereich dargestellt werden, wobei die Kombination einer Faltung entspricht, und dann im Frequenzbereich dargestellt werden, wobei die Kombination einer Multiplikation entspricht. Das Modell lässt sich im Frequenzbereich durch die folgende Gleichung darstellen:

$$R = G_R \cdot G_U \cdot G_S \cdot S$$

Hierbei gilt:

$R$: Frequenzverlauf des Empfangspuls als Funktion der Frequenz;

$G_R$: Komponenten des empfangenden Wandlers als Funktion der Frequenz, gegebenenfalls abhängig von einem Raumwinkel $\Omega$;

$G_U$: Komponenten der Umgebung in Abhängigkeit der Frequenz (und gegebenenfalls des Raumwinkels $\Omega$);

$G_S$: Komponenten des sendenden Wandlers in Abhängigkeit der Frequenz und gegebenenfalls des Raumwinkels $\Omega$; und

$S$: Frequenzverlauf des Sendepulses in Abhängigkeit der Frequenz.

Die Frequenz betrifft hierbei die Frequenz der Trägerwelle. Sämtliche in der Formel vorgesehenen Funktionen sind im Frequenzraum dargestellt, vorzugsweise im komplexen Frequenzraum und stellen in einer vereinfachten Ausführungsform lediglich den Betrag des Spektrums für verschiedene reelle Frequenzen dar. Erfindungsgemäß kann auch eine Darstellung im Zeitbereich verwendet werden. Die entsprechende Darstellung im Frequenzbereich ergibt sich durch Fourriertransformation oder durch Laplacetransformation der Darstellung im Zeitbereich. Gleichermaßen entspricht die Darstellung im Zeitbereich der inversen Transformierten im Frequenzbereich.

Zur Bestimmung der Komponenten der Übertragungseigenschaften des Wandlers (d.h. die Komponenten, die dem Wandler als Sender bzw. als Empfänger zugeordnet sind) wird die folgende Berechnung durchgeführt:

$$G_R \cdot G_S = (R/S) \cdot G_U^{-1}$$

Hierbei sind $G_R \cdot G_S$ die Komponenten des Transceivers, die sich auf dessen Eigenschaft als Sender und dessen Eigenschaft als Empfänger aufteilen. R/S ist das Verhältnis zwischen Empfangspuls und Sendepuls. Weiterhin ist $G_U^{-1}$ die invertierte Gesamtcharakteristik, die aus der erfassten Umgebung durch Schätzung bzw. Ermittlung anderer Komponenten, Zuordnung oder Abschätzung ermittelt wurde. Die Darstellung R/S ist symbolhaft zu verstehen und gibt das Verhältnis von R zu S wieder, ggf. anhand einer komplexen Übertragungsfunktion.

Gemäß einer ersten Ausführungsform der Erfindung umfassen die der Umgebung zugehörigen Komponenten der -Übertragungsfunktion lediglich die Eigenschaften der Umgebung, die auf der Fortpflanzung der entsprechenden Welle in der Umgebung und der Reflexion dieser Welle beruht. In dieser Ausführungsform werden Auswirkungen auf die gesendete bzw. empfangene Welle, welche sich durch Befestigung des Wandlers oder Nahobjekte wie Abdeckungen des Wandlers und Ähnliches ergibt, den Komponenten der Übertragungscharakteristik des Transceivers zugeschlagen. In einer weiteren, alternativen Ausführungsform sind die befestigungsspezifischen Charakteristika des Wandlers bzw. Nahfeldobjekte wie Befestigung oder Abdeck- bzw. Schutzkappen Teil der Komponenten der Übertragungseigenschaften, die die Umgebung aufweist. Darüber hinaus kann Übersprechen zwischen verschiedenen Elementen des Transceivers, falls dieser mehrere Ultraschallwandler bzw. Mikrowellen-Sender/Empfänger umfasst, als Teil der Komponenten der Übertragungscharakteristik bzw. der Übertragungseigenschaften des Transceivers angesehen werden, wobei eine nachgeordnete, alternative Ausführungsform vorsieht, dass Übersprechen als Teil der Komponenten angesehen werden, die der Umgebung zugehört.

Die Übertragungscharakteristik bzw. deren Komponenten können kann als komplexe Darstellung vorgesehen werden mittels Real-und Imaginärteil bzw. durch die Darstellung von Betrag und Phase in Abhängigkeit der Frequenz. Ferner kann die Übertragungskanaleigenschaft lediglich vorgesehen werden durch eine Betragsdarstellung oder durch eine Phasendarstellung des Verhaltens einer Übertragung, wobei das Verhalten einen Kanal wiedergibt, der aus Fortpflanzung des Sendepulses in der Umgebung und Reflexion des Sendepulses in der Umgebung besteht. Insbesondere umfasst diese Komponenten nicht die Übertragungseigenschaften bzw. Einflüsse durch ein Frequenzverhalten des Wandlers. Anstatt einer Frequenzdarstellung kann auch eine zeitliche Darstellung verwendet werden, in der entweder nur die Amplitude, nur die Phase oder beide Kombinationen miteinander das Signal bzw. den Kanal wiedergeben.

Die Gesamtübertragungsfunktion, das heißt das Verhältnis, das der Empfangspuls zu dem Sendepuls bildet, wird vorgesehen durch die Quotienten zwischen Empfangspuls und Sendepuls (jeweils vorzugsweise dargestellt im Frequenzraum als Laplace-Transformierte oder als Fourier-Transformierte des zeitlichen Verlaufs des jeweiligen Pulses).

Um die die Komponenten der Umgebungs-Übertragungsfunktion vorgesehen, wird die Umgebung erfasst. Die Umgebung wird hierbei gemäß einer spezifischen Ausführungsform erfasst durch optisches Abtasten der Umgebung mit Erfassung eines Standbildes oder einer Bilderfolge zumindest eines Abschnitts der Umgebung oder durch Ultraschall- oder Mikrowellen-basiertes Abtasten unter Verwendung weiterer Positionsbestimmungsvorrichtungen, die den Transceiver nicht umfassen. Anhand dieser Erfassung kann dann eine Situation abgeleitet werden, die mit einer geschätzten, vorgegebenen Übertragungscharakteristik bzw. umgebungsspezifische Komponenten hiervon verknüpft ist. Um die Umgebung zu charakterisieren und daraus die geschätzten Komponenten abzuleiten, wird daher beispielsweise eine Videokamera verwendet, mit der die Umgebung erfasst wird, wobei die Beurteilung der Videodaten anhand eines Standbildes oder anhand einer Bilderfolge vorgesehen werden kann. Alternativ (oder in Kombination mit einer optischen Erfassung) kann die Art bzw. Kategorie der Umgebung durch Positionsbestimmungsvorrichtungen vorgesehen werden, die vorzugsweise den Transceiver nicht umfassen, welcher auch zum Senden/Empfangen der Impulse vorgesehen ist und dessen Übertragungseigenschaft bzw. Komponenten der Übertragungscharakteristik vorgesehen werden soll. Gemäß einer hierzu alternativen Ausführungsform wird zur Erfassung der Umgebung nicht eine zusätzliche Erfassungsvorrichtung vorgesehen, sondern der Transceiver, dessen Komponenten der Übertragungscharakteristik vorgesehen werden soll, wird selbst verwendet, um die Art der Umgebung zu erfassen und dadurch eine Kategorisierung der Umgebung bzw. der Objekte in der Umgebung zu ermöglichen, um aus der Kategorisierung eine Komponente der Übertragungscharakteristik bzw. eine Übertragungseigenschaft durch Zuordnung hergeleitet werden kann. Bei optischer Erfassung kann eine eigene elektronische Kamera vorgesehen sein, mit der die Umgebung erfasst wird, wobei jedoch vorzugsweise eine bereits bestehende Kamera verwendet wird, die für andere Funktionen, beispielsweise Nightview usw. vorgesehen ist.

Das Zuordnen umfasst hierbei das Erfassen mindestens eines Objekts innerhalb des Standbildes bzw. innerhalb der Bilderfolge. Hierbei kann auch ein freies Feld als Objekt betrachtet werden, falls das Standbild bzw. die Bilderfolge kein Objekt umfasst. Da jedoch bei einem freien Feld als Umgebung keine geeignete Reflexion auftritt, kann hierbei auch keine Übertragungscharakteristik des Transceivers erfindungsgemäß durchgeführt werden, so dass die Erfassung zumindest eines Objekts als Voraussetzung für die Ausführung des vorliegenden Verfahrens vorgesehen werden kann.

Anstatt eines Objekts in den optischen Daten der Kamera zu erfassen, kann erfindungsgemäß auch mindestens ein Objekt innerhalb des Reflexionsverlaufs erfasst werden, wenn eine Abtastung durch Mikrowellen, insbesondere Radarwellen oder durch akustische Wellen durchgeführt wird. Ein weiterer Schritt des Verfahrens sieht vor, das mindestens eine Objekt, welches erfasst wurde, zu einer Objektkategorie zuzuordnen. Dadurch wird eine Objektkategorie vorgesehen, welche wiederum mit einer Übertragungskanaleigenschaft verknüpft ist. Diese Übertragungskanaleigenschaft ist eine typische Kanaleigenschaft, wie sie in Umgebungen auftritt, in denen sich ein Objekt gemäß erfasster Kategorie befindet. Als Objektkategorie sind beispielsweise die Größe des Objekts, die Position des Objekts, die Ausrichtung des Objekts (zum Transceiver, akustische bzw. allgemein wellenbezogene Reflexionseigenschaften, Entfernung und ähnliche aus dem erfassten Umfeld zu extrahierende grundlegende geometrische bzw. akustische Eigenschaften.

Die Zuordnung der spezifischen Ausführungsform kann vorgesehen sein über eine Datenbank oder über einen Algorithmus, der aus Eigenschaften des Objekts bzw. aus der Objektkategorie eine geschätzte Übertragungskanaleigenschaft schätzt. Gemäß einem ersten Beispiel als Objektkategorie die Nähe des Objekts vorgesehen sein, so dass beispielsweise durch optische Erfassung die Entfernung des Objekts erfasst werden kann und anhand des erfindungsgemäßen Verfahrens Laufzeitfehler, beispielsweise durch Trägheit des Wandlers, anhand dieser Referenz erfasst und korrigiert werden können. Ein weiteres Beispiel betrifft die Form des Objekts als Objektkategorie, wobei eine sich zu beiden Seiten ausdehnende Mauer vor dem Transceiver befindet und somit mit einem einzelnen, diskreten Echo zu rechnen ist. Treten beispielsweise durch mechanische Effekte am Transceiver mehrere, zueinander zeitversetzte Echos auf, so kann unmittelbar durch Vergleich darauf geschlossen werden, dass die weiteren Echos entweder durch angekoppelte passive akustische Systeme oder andere Schwingsysteme hervorgerufen wird, oder beispielsweise durch die Laufzeit zeitversetztes Übersprechen eines benachbarten Wandlers hervorgerufen wird. Der Vergleich wird erfindungsgemäß vorgesehen durch Invertieren der Umgebungs-Übertragungsfunktion und Kombinieren dieser Funktion mit dem Verhältnis zwischen Empfangspuls und dem Sendepuls.

Das Verfahren umfasst ferner das Vorsehen einer Datenbank, indem die Verknüpfung zwischen erfasstem Objekt und abgeschätzten Komponenten bzw. Übertragungseigenschaft vorgesehen wird. In dieser Datenbank sind Objektkategorien (vorzugsweise in Form von Bildobjektparametern bei optischer Erfassung der Umgebung und in Form von Frequenzsignaturen bei akustischer oder elektromagnetischer Form der Abtastung) zugeordnet zu jeweiligen Komponente bzw. Übertragungseigenschaft. Vorzugsweise ist jeder Objektkategorie (beispielsweise in Form von Parameterintervallen eindeutig einer Komponente der gespeicherten Übertragungsfunktionen zugeordnet. Das Zuordnen der erfassten Umgebung umfasst daher das Abrufen der Komponente der gespeicherten Umgebungs-Übertragungsfunktionen, wobei die abgerufene Umgebungs-Übertragungsfunktion anhand der zugeordneten Objektkategorie auf einfacher Weise aus der Datenbank abgerufen werden kann.

Die Erfindung sieht ferner ein Verfahren zur relativen Positionsbestimmung mittels eines Transceivers vor, das das oben beschriebene Verfahren zur Abschätzung der Komponente der Übertragungscharakteristik umfasst. Hierbei ist vorgesehen, dass das Verfahren zur relativen Positionsbestimmung insbesondere den Schritt des Vorsehens der Komponente der Übertragungscharakteristik des Transceivers umfasst. Darüber hinaus umfasst das erfindungsgemäße Positionsbestimmungsverfahren insbesondere die oben beschriebenen Schritte des Sendens und Empfangens. Zur relativen Positionsbestimmung wird daher in üblicher Weise ein Schallpuls oder ein Mikrowellenpuls gesendet (insbesondere durch den Schritt des Sendens des Sendeimpulses wie oben beschrieben) und der sich durch Reflexion der Umgebung ergebende Empfangspuls wird mittels des Receivers empfangen. Um die Position zu bestimmen, wird der Empfangspuls jedoch mit der Inversen der Komponente der Übertragungscharakteristik gefiltert, die verfahrensgemäß abgeschätzt wurde. Um die Position vorzusehen, wird in üblicher Weise der gefilterte Empfangspuls anhand von Laufzeit-, Phasen- und/oder Frequenzuntersuchungen zur Positionsermittlung verwendet. Zur Positionsermittlung können aus dem Stand der Technik weitreichend bekannte Verfahren verwendet werden, die im Wesentlichen auf Radartechnik beruhen bzw. mittels akustisches reflexionsbezogenes Abtasten. Im Gegensatz zum Stand der Technik wird der Empfangspuls jedoch hinsichtlich der Einfluss des Wandlers bereinigt, indem dieser mit der Inversen der geschätzten Komponente der Übertragungscharakteristik gefiltert wird.

In einer weiteren spezifischen Ausführungsform der Erfindung wird ein Verfahren zur relativen Positionsbestimmung vorgesehen, bei dem der Sendepuls vor dem Senden mit einer Inversen der erfindungsgemäß vorgesehenen Komponente der Übertragungscharakteristik des Transceivers gefiltert wird, wobei angenommen wird, dass diese Signalveränderung durch die Signalveränderung aufgehoben wird, die von dem Transceiver vorgesehen wird. Indem zunächst die Transceivereigenschaften erfindungsgemäß geschätzt werden, nimmt die Absendung eines mit der Inversen der Komponente der Übertragungscharakteristik des Wandlers gefilterten oder gefalteten Sendepulses die Verzerrungen bzw. Fehler vorweg, die sich durch das Senden bzw. Empfangen durch den Transceiver ergeben. Da sich die Vorverzerrung und die vom Transceiver vorgesehene Verzerrung gegenseitig kompensieren, ergibt sich eine Abtastung, in der Streuungen durch den Transceiver bzw. damit verknüpfte Fehler aufgehoben sind. Die Faltung bzw. Filterung vorab mit der Inversen geschätzten Komponente der Übertragungscharakteristik des Transceivers kann auch als Vorverzerrung bzw. Pre-Distortion bezeichnet werden.

Erfindungsgemäß wird ferner ein Verfahren zur Kalibrierung vorgesehen, bei dem die erfindungsgemäß abgeschätzte Komponente der Übertragungscharakteristik des Transceivers zur Kalibrierung des Transceivers verwendet wird. Die Kalibrierung kann einmalig erfolgen oder kann wiederholt erfolgen, vorzugsweise periodisch oder in bestimmten Zeitabständen. Die Kalibrierung kann ferner durchgehend ausgeführt werden, wobei einzelne geschätzte Komponenten der Übertragungscharakteristika interpoliert oder gemittelt werden, um den Einfluss von Varianzen zu minimieren. Beispielsweise kann die Komponente der Übertragungscharakteristik wiederholt abgeschätzt werden und zur Kalibrierung wird eine aus diesen Übertragungscharakteristika gemittelte Übertragungscharakteristik verwendet. Die oben beschriebene Vorverzerrung wird ferner vorzugsweise innerhalb dieses Kalibrierungsverfahrens verwendet, wobei zunächst die Komponente der Übertragungscharakteristik erfindungsgemäß ermittelt wird, und daraufhin ein Sende-Ansteuerimpuls (vorzugsweise elektronisch) mit der Inversen der Komponente der Übertragungscharakteristik gefaltet wird, und der so gefaltete oder gefilterte Sende-Ansteuerpuls dem Transceiver zugeführt wird. Im Allgemeinen wird mit der Inversen der Komponente der Übertragungscharakteristik gefaltet, wenn diese im Zeitbereich vorliegt, wobei bei einer Darstellung im Frequenzbereich die Faltung durch eine einfache Multiplikation der Funktion vorgesehen wird. Eine Filterung mit der Inversen soll daher unabhängig von der Darstellung im Frequenz- oder Zeitbereich eine derartige Kombination mit der Inversen der geschätzten Komponente der Übertragungscharakteristik umfassen, wobei diese Kombination eine später anzunehmende Beeinflussung des gesamten Übertragungskanals durch den Transceiver vorwegnimmt und durch Umkehrung vorab aus dem empfangenen Signal entfernt.

Die Erfindung wird ferner vorgesehen durch eine Datenbank zur Abschätzung der Komponenten der Übertragungscharakteristik eines Transceivers. Die Datenbank umfasst erste und zweite Einträge. Die ersten Einträge geben die Merkmale einer Umgebung oder Merkmale von Objekten dieser Umgebung wieder. Die zweiten Einträge, die den ersten Einträgen in eindeutiger Weise zugeordnet sind, geben Komponenten der Übertragungscharakteristik der Umgebung wieder, welche wiederum den Merkmalen der Umgebung bzw. der Objekte zugeordnet sind, durch die diese vorgesehen werden. Somit sieht die Datenbank die Zuordnung zwischen erfassten Umgebungsmerkmalen bzw. Objektmerkmalen und einer zugehörigen, anzunehmenden umgebungsbezogenen Komponente der Übertragungscharakteristik - vor. Daher dient die Datenbank sowie die oben beschriebene Zuordnung zwischen erfasster Umgebung und umgebungsbezogenen Komponenten der Übertragungscharakteristik als Referenz für die Gesamt-Übertragungscharakteristik, wobei anhand der Referenz beeinflusst durch die Umgebung herausgerechnet werden und die verbleibende Komponente der Funktion als Wandlereinflüsse (das heißt Übertragungscharakteristik des Transceivers) betrachtet werden. Mit der Datenbank kann ferner eine Interpolationseinrichtung verbunden sein, mit der die zugeordneten umgebungsbezogenen Komponenten der Übertragungscharakteristik interpoliert werden können gemäß den eingegebenen Objektmerkmalen.

Schließlich wird die Erfindung vorgesehen durch eine Vorrichtung zum Abschätzen der Komponenten der Übertragungscharakteristik eines Transceivers, umfassend: eine Objektklassifizierungseinrichtung mit einem Eingang für Bilddaten einer Umgebung. Die Vorrichtung kann ferner eingerichtet sein, einen Verlauf eines in der Umgebung reflektierten Pulses aufzunehmen. Die Objektklassifizierungseinrichtung ist eingerichtet, die Umgebung bzw. dort vorgesehene Objekte zu klassifizieren. Die Objektklassifizierungseinrichtung ist mit einer Speichervorrichtung verbunden, um an die Speichervorrichtung Merkmalsdaten abzugeben, welche Merkmale der Umgebung bzw. der dort vorgesehenen Objekte wiedergeben. Die Speichervorrichtung umfasst die oben beschriebene Datenbank und ermöglicht somit eine Zuordnung zwischen erfassten Umgebungsdaten und einer zugehörigen geschätzten Umgebungs-Übertragungsfunktion bzw. Komponenten der Übertragungscharakteristik, die der Umgebung zugehören. Die Speichervorrichtung umfasst daher einen Ausgang, der zur Abgabe von Daten eingerichtet ist. Der Ausgang ist derart eingerichtet, dass die von diesem abgegebenen Daten die Komponenten der Übertragungscharakteristik, die der Umgebung zugehören (d.h. von Einflussgrößen der Umgebung resultieren), in analoger Form, in digitaler Form, als Parametersatz oder als Frequenzverlauf-Stützpunkte wiedergeben.

Die Datenbank kann hierbei durch einen (nicht flüchtigen) optischen oder halbleiterbasierten Speicher vorgesehen sein. Die Vorrichtung selbst kann vorgesehen sein durch programmierbare Hardware, zugehörige Software oder festverdrahtete Logikbausteine. Insbesondere wird die Vorrichtung vorzugsweise vorgesehen durch einen Prozessor, der die Vorrichtungsmerkmale aufgrund von Software vorsieht, die auf einem Speicher gespeichert ist, der mit dem Prozessor in Verbindung steht und diesen steuert.

Komponenten der Übertragungscharakteristik, die von Einflussgrößen der Umgebung bestimmt werden, d.h. umgebungsbedingte Komponenten der Übertragungscharakteristik ergeben sich durch Abhängigkeiten der Übertragung durch die Umgebung vom Klima, d.h. Temperatur, Feuchte und Luftdruck. Diese medienbezogenen Einflussgrößen können beispielsweise für ein vordefiniertes Zeitfenster als konstant angesehen werden.

Eine weitere Komponente, die (ebenfalls) die Streckendämpfung als ein Teil der Übertragungscharakteristik betrifft, gibt die Abhängigkeit der Dämpfung von dem Abstand wieder. Werden die medienbedingten Komponenten als konstant angenommen und das Fahrzeug bewegt, dann kann die sich ergebende Änderung der Übertragungscharakteristik auf Komponenten zurückgeführt werden, die den veränderlichen Abstand betreffen.

In ähnlicher Weise kann bei einer feststehenden Umgebung und veränderlicher Übertragungscharakteristik geschlossen werden, dass sich nur medienbedingte Komponenten der Übertragungscharakteristik ändern, d.h. durch die Einflussgröße Wind. Bei Temperaturänderungen betreffen die Änderungen die medienbedingten und die Wandlerbedingten Komponenten der Übertragungscharakteristik. Da die Abhängigkeit zwischen Wandlereigenschaften und Temperatur bzw. zwischen Medieneigenschaften und Temperatur bekannt sind (bsp. durch eine Näherung oder einer Look-up-Tabelle), können die (Änderungen der) Komponenten anhand einer erfassten Temperatur bestimmt werden. Die Abhängigkeiten ergeben sich durch Einschwingeffekte in Temperaturschichtungen u.ä. Bei bekanntem (gemessenen) Objektabstand (als eine Komponente der Übertragungscharakteristik, die sich in einer Verzögerung widerspiegelt) kann der Zeitverlauf der Windgeschwindigkeit (z.B. das Maximum) oder/und ein Temperatur-Feuchte-Äquivalent bei einer Temperaturschichtung bestimmt werden, um daraus anhand einer vorbekannten Abhängigkeit (Näherung) Komponenten zu bestimmten.

Als objektbedingte Komponente der Übertragungscharakteristik kann, falls ein Objekt in der Umgebung den Übertragungsweg zwischen Sender und Empfänger beeinflusst, die Reflektivität der Objektoberfläche als Einflussgröße verwendet werden, um daraus auf die Komponente zu schließen die die Dämpfung der Signalstärke durch das Objekt betrifft. Dies betrifft auch objektbedingte Komponenten der Übertragungscharakteristik, die die Objektform betreffen, wobei die Objektform als Einflussgröße eine objektbedingte Komponente der Übertragungscharakteristik definiert. Wird beispielsweise die Objektform anhand einer Komponente erkannt, so kann daraus auf die Komponente geschlossen werden, die die Dämpfung durch das Objekt wiedergibt, insbesondere bei Objekten > 0.1$\lambda$.

Als wandlerbedingte Komponente der Übertragungscharakteristik kann, die Antennencharakteristik angesehen werden, insbesondere abhängig von den mechanischen Randbedingungen im Nahfeld der Wandlers. Anhand der Änderung der Signalstärke des Empfangssignals (als eine Komponente der Übertragungscharakteristik) eines durch andere Maßnahmen erkannten Objektes, z.B. ein Pfostens, kann bei einer Bewegung insbesondere quer zur Hauptachse des Sensors auf die Komponenten geschlossen werden, deren Einflussgröße die Antennencharakteristik des Sensors ist. Werden beispielsweise ferner die Spektralanteile des Sendesignals variiert, kann zudem auch noch die Frequenzabhängigkeit der Antennencharakteristik als eine weitere Komponente der Übertragungscharakteristik bestimmt werden.

Im Folgenden ist ein Beispiel zu gezielten Erfassung einiger Komponenten der Übertragungscharakteristik dargestellt. In diesem Beispiel parkt ein mit Wandlern ausgestattetes Fahrzeug vor einer Wand. Das Zeitverhalten der Echolaufzeit (d.h. eine Verzögerungskomponente der Übertragungscharakteristik) dient als Ausgangspunkt zur Erfassung der Position und Orientierung der Wand (bzw. deren Änderung. Als dem Zeitverhalten kann auch auf die Winkelorientierung der Wandler zur Wand, auf die Relativposition gegenüber der Wand und ggf. auf die Bewegungsbahn geschlossen werden.

Aus der Echoverformung als eine Komponente der Übertragungscharakteristik kann auf Kenngrößen über die Wandoberfläche geschlossen werden, z.B. Rauhigkeit, Lücken usw.

Aus der Änderung der Echolautstärke als eine Komponente der Übertragungscharakteristik kann während der Relativbewegung auf bekannten (da durch andere Komponenten erfasste) Bahnen auf die Richtcharakteristik geschlossen werden, beispielsweise wenn sich die Winkelorientierung eines Wandlers sich im wesentlichen nicht ändert (Hauptachsenausrichtung senkrecht zur Wand) und sich gleichzeitig die Winkelorientierung eines weiteren, gleichartigen Wandlers sich wesentlichen ändert (wenn bsp. der Wandler s geneigt ist und sich der Abstand zum Objekt ändert). Eine weitere Erfassungsmöglichkeit für wandlerbezogene Komponenten ist die Erfassung von Kreuzechos.

Ferner kann als eine Komponente der Übertragungscharakteristik die Echolautstärke bei bekanntem Abstand d und somit bei bekannter (aus dem Abstand abgeleiteter) Streckendämpfung ermittelt werden. Anhand der Streckendämpfung kann als eine Teilkomponente der Echolautstärke die Reflektivität der Objektoberfläche ermittelt werden.

Ferner kann die spektralen Zusammensetzung der Übertragungscharakteristik als eine Komponente der Übertragungscharakteristik verwendet werden, um die spektrale Abhängigkeit der Antennencharakteristik als eine weitere Komponente zu erfassen, bsp. bei der Blickwinkeländerung durch Frequenzwahl. Hierzu werden Änderungen in der Übertragung gezielt vorgesehen (wie auch bei der Änderung der Fahrzeugposition relativ zur Wand) durch gezielte Änderung der spektralen Zusammensetzung des Sendesignals. Anhand dieser Änderung und der dazu beobachteten Änderung der Komponente (hier: Signallautstärke bzw. Dämpfung) kann die Dämpfung in Abhängigkeit von der Frequenz ermittelt werden.

Es können gezielt Einflussgrößen (Abstand, Sendespektrum) geändert werden, um aus der zugehörigen Änderung einer Komponente der Übertragungscharakteristik auf andere Komponente zu schließen. Es können ferner gezielt Einflussgrößen wie Temperatur, Luftdruck oder Luftfeuchte ermittelt werden, um anhand der Einflussgrößen selbst oder anhand der Änderungen andere Komponenten zu ermitteln.

Kurze Beschreibung der Zeichnungen

Fig. 1 zeigt ein Schaubild zur näheren Erläuterung des der Erfindung zugrunde liegenden Konzepts, und

Fig. 2 eine Ausführung einer erfindungsgemäßen Vorrichtung zur Abschätzung der Übertragungscharakteristik eines Transceivers.

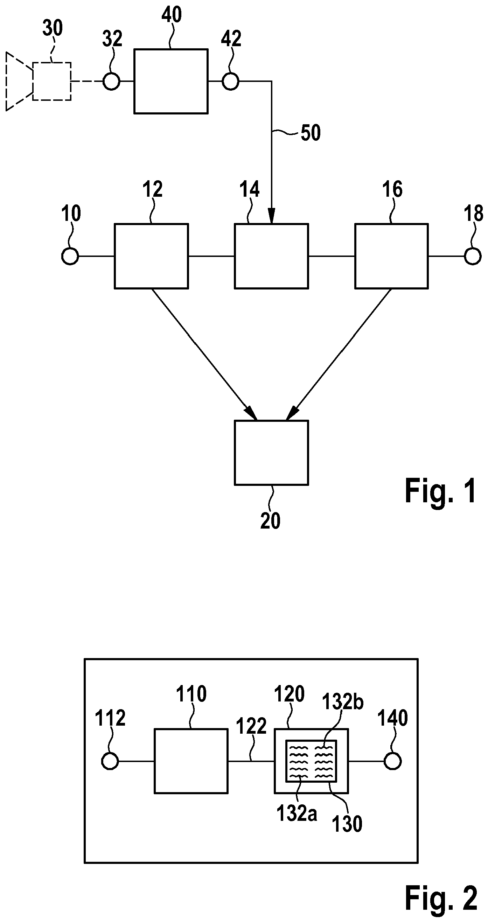

Die Fig. 1 zeigt generalisiert ein Schaubild zur Darstellung des der Erfindung zugrunde liegenden Konzepts und dient zur näheren Erläuterung des erfindungsgemäßen Verfahrens. In der Fig. 1 ist zunächst ein Kanalmodell dargestellt mit einem Eingang 10, an den Transceiver-Sendesignale angelegt werden. Diese werden von einem Wandler umgesetzt, der eine Komponente 12 der Übertragungscharakteristik aufweist. Durch die Komponente der 12 Übertragungscharakteristik des Transceivers wird wiedergegeben, in welcher Weise das Ansteuersignal 10 umgewandelt wird und als akustische oder elektromagnetische Wellen abgestrahlt wird. Darauf folgt eine Veränderung des Signals, welches durch Schallwellen bzw. Mikrowellen dargestellt wird, durch die Umgebung, durch die sich die Welle hindurchbewegt und in der die Welle reflektiert wird. Die zugehörigen Komponenten 14 der Übertragungscharakteristik sind als Übertragungskomponente 14 dargestellt. Die reflektierte Welle wird wiederum vom Wandler erfasst, dessen Übertragungscharakteristik die Wandlereigenschaften wiedergibt, mit denen die Welle erfasst und in ein Sensorsignal umgewandelt wird. Die Komponenten 16 der Übertragungscharakteristik haben als Einflussgröße die Empfangseigenschaften des Wandlers. Das empfangene Signal ist wiedergegeben durch die Darstellung des Empfangsimpulses im Frequenzraum oder in zeitlicher Darstellung (vorzugsweise inklusive der Phase).

Bezugnehmend auf die oben dargestellte Formeldarstellung wird der Frequenz- oder Zeitverlauf des Sendepulses durch das Bezugszeichen 10 wiedergegeben und entspricht der Funktion S, die Komponente Übertragungscharakteristik des Transceivers bezogen auf dessen Sendefunktion ist wiedergegeben durch $G_S$, Bezugszeichen 12, die Komponente der Übertragungsfunktion, die durch die Umgebung vorgesehen wird, entspricht $G_U$ (Bezugszeichen 14), die Komponente der Übertragungscharakteristik des Transceivers bezogen auf dessen Empfangsfunktion entspricht $G_R$ mit dem Bezugszeichen 16 und das Empfangssignal R entspricht Bezugszeichen 18. Die Übertragungscharakteristika des Transceivers bezogen auf die Sendefunktion bzw. den Frequenzverlauf des Sendepulses (Bezugszeichen 12) und bezogen auf die Empfangsfunktion bzw. den Frequenzverlauf des Empfangspulses (Bezugszeichen 16) können zusammengefasst werden zu wandlerbedingten Komponenten der Übertragungscharakteristik 20, die insgesamt das Transceiververhalten wiedergibt.

Gemäß einem ersten Aspekt der Erfindung umfasst das Verfahren einen Prozess der Erfassung bzw. Zuordnung einer weiteren Komponente der Übertragungsfunktion. Diese wird vorzugsweise anhand des gleichen Signalpulses erfasst der auch dem die Übertragungsfunktion durchläuft, die durch 10, 12, 14, 16 und 18 wiedergegeben wird. Ein Wandler 30 erfasst das Empfangssignal 32 und gibt dieses an eine Erfassungseinrichtung/Zuordnung 40 für Komponenten der Übertragungscharakteristik weiter. Im Rahmen eines Beispiels erfasst die Erfassungseinrichtung eine erste Komponente, d.h. eine Verzögerung, und errechnet hieraus die Ausbreitungsdämpfung als eine weitere Komponente der Übertragungscharakteristik. Die Verknüpfung ergibt sich beispielsweise über den Abstand, der sich in der Verzögerung widerspiegelt, der wiederum gemäß einem Ausbreitungsmodells (bsp. Freiraumausbreitung) oder einer anderen Abbildung mit der weiteren Komponenten verknüpft ist. Diese weitere Komponente wird am Ausgang 42 ausgegeben und über eine Verbindung 50 in das Modell 14 eingefügt, das die umgebungsbedingten Komponenten der Übertragungscharakteristik wiedergibt. Dadurch werden die umgebungsbedingten Komponenten der Übertragungscharakteristik (dargestellt durch Umgebungsübertragungsmodell 14) näher bestimmt. Beispielsweise umfasst das Umgebungsübertragungsmodell 14 lediglich Komponenten, die aus den Einflussgrößen Wellenausbreitung und Reflexion am Objekt resultieren. Dann kann die Komponente, die die Wellenausbreitung betrifft, definiert werden durch die weitere Komponente des Ausgangs 42 und die verbleibende Komponente kann bestimmt werden, wenn die Gesamtfunktion des Modells (bsp. bei bekannten Komponenten 12, 16) vorgesehen wird. Die Übertragungsstrecke 10, 12, 14, 16 und 18 gibt das (akustische) Übertragungsmodell wieder, das auch den Wandler 30 und das Empfangssignal 32 zur Erfassung mindestens einer Komponente der Übertragungscharakteristik umfasst bzw. auf der die Abbildung durch die Erfassungseinrichtung 40 beruht.

Ein weiterer, nachgeordneter Aspekt der Erfindung betrifft die Erfassung von Komponenten der Übertragungscharakteristik anhand einer "externen" Ermittlung von Eigenschaften durch ein System, das nicht identisch zu dem System ist, welches durch die Übertragungsstrecke 10, 12, 14, 16 und 18 wiedergegeben ist. Zur Erläuterung wird wiederum Fig. 1 herangezogen. Die Umgebung wird mittels einer Kamera 30 aufgenommen, die die Umgebung erfasst und als Bilddaten 32 an eine Zuordnung 40 abgibt. Die Zuordnung 40 kann beispielsweise durch die erfindungsgemäße Datenbank vorgesehen sein. Die Zuordnung 40 ordnet den erfassten Umgebungsdaten umgebungsbedingten Komponenten der Übertragungscharakteristik zu, die bei dieser Umgebung zu erwarten sind bzw. beispielsweise bei der Erstellung der Datenbank gemessen wurden. Die Zuordnung 40 umfasst daher zum einen die Zuordnung der Bilddaten zur umgebungsbedingten Übertragungscharakteristik und sieht zum zweiten vor, innerhalb dieses Abbildungsprozesses Objektmerkmale aus den optischen Daten 32 zu erfassen, so dass die in den Bilddaten vorliegenden Objektdaten auf einfache Weise parametrisiert sind, wobei anhand eines Parametersatzes durch die Abbildung auf die umgebungsbedingten Komponenten der Übertragungscharakteristik geschlossen werden kann. Der Parametersatz umfasst vorzugsweise eine feste Anzahl diskreter numerischer Parameter, beispielsweise eine Anzahl von drei mit den Parameterkategorien Abstand, Größe und Struktureigenschaften (beispielsweise durchgängig bei einer Wand, aus einer Elementenvielzahl bestehend bei einem Gitter. Die zugeordneten umgebungsbedingten Komponenten der Übertragungscharakteristik kann beispielsweise durch einzelne Stützpunkte vorgesehen sein oder durch andere Merkmale wie eine durch Parameter vorgesehene Näherungsfunktion, durch einen Zeitversatzwert oder Ähnliches. Die Zuordnung 40 sieht so eine geschätzte umgebungsbedingte Übertragungscharakteristik 42 vor. Diese dient als Referenz zu der Übertragungsfunktion 14, die durch die Erfassung der Gesamt-Übertragungscharakteristik 12, 14, 16 erfasst wurde. Der Pfeil 50 gibt das Element des erfindungsgemäßen Konzepts wieder, demnach diese aus der erfassten Umgebung geschätzten umgebungsbedingten Übertragungscharakteristik 42 an die Stelle der Übertragungscharakteristika 14 der Umgebung tritt, die innerhalb der Gesamtübertragungsfunktion 12, 14, 16 durch Messung erfasst wurde. Es verbleiben so die Übertragungsfunktionen 12, 16, die die Übertragungscharakteristik des Transceivers wiedergeben. Da die geschätzte umgebungsbedingten Komponenten der Übertragungscharakteristik 42 gegenüber der Übertragungsfunktion 14 für sich genommen durch Schätzung bekannt ist und somit getrennt von der Übertragungscharakteristik 12, 16 des Wandlers betrachtet werden kann, kann die Übertragungscharakteristik 12, 16 des Transceivers als Gesamt-Übertragungscharakte-ristik 20 vorgesehen werden.

Grundsätzlich können nahe beim Transceiver gelegene Elemente bzw. deren Einfluss auf die Übertragungscharakteristik des Transceivers den wandlerbedingten Komponenten der Übertragungscharakteristik 12, 16, das heißt dem Transceiver selbst zugeordnet werden oder der umgebungsbedingten Komponenten der Übertragungscharakteristik 14. Beispielsweise wird so ein nahe am Transceiver gelegenes Objekt, beispielsweise ein Teil einer Abdeckung oder eine Abschattung durch ein Element der Anordnung, in der der Transceiver angeordnet ist, beispielsweise ein Teil eines Kofferraumgriffs, eine Plastikschürze oder andere Bereiche eines Kraftfahrzeugs, den Komponenten der Übertragungscharakteristik des Transceivers zugeordnet. Letztlich werden vorzugsweise sämtliche bei der Erfassung der Umgebung zu erkennenden Objekte den umgebungsbedingten Komponenten der Übertragungscharakteristik zugeordnet, und sämtliche nicht bei der Erfassung der Umgebung detektierbaren Objekte werden den umgebungsbedingten Komponenten der Übertragungscharakteristik 20 des Transceivers zugeordnet. Beispielsweise bei der Verwendung einer Videokamera zur Erfassung der Umgebung werden nur die Objekte bei der Erfassung der Umgebung berücksichtigt, die innerhalb des Erfassungsbereichs der Videokamera liegen, und nicht von der Videokamera zu erfassende Objekte, beispielsweise direkt am Transceiver gelegene Hauben, Teile von Abdeckungen oder Ähnliches, werden der Übertragungscharakteristik des Transceivers zugeordnet.

Im Allgemeinen eignet sich das erfindungsgemäße Verfahren sowie die erfindungsgemäße Vorrichtung zum Einsatz in Fahrzeugen, so dass als Umgebung die Umgebung eines Kraftfahrzeugs bezeichnet wird bzw. der Ausschnitt der Umgebung, der von einer nach außen gerichteten Videokamera innerhalb des Fahrzeugs erfasst werden kann. Gleiches gilt bei der Erfassung durch andere Sensoren, beispielsweise durch weitere Positionssensoren oder auch durch den Transceiver selbst, so dass auch durch akustische oder elektromagnetische Wellen erfassbare Objekte der Umgebungsfunktion zugeordnet werden, und nicht von diesen Sensoren zu erfassenden Objekte der Übertragungsfunktion des Transceivers zugeordnet werden. Als Transceiver eignet sich insbesondere ein Ultraschall- oder Radarsensor, der sich an der Außenseite eines Kraftfahrzeuges befindet, wobei die zu erfassenden Objekte innerhalb der Umgebung beispielsweise andere Fahrzeuge (beweglich oder feststehend), Verkehrszeichen oder Straßenbauelemente sind, beispielsweise Laternen, oder auch Häuserwände und Ähnliches. Als Objekt werden ferner lediglich diejenigen Objekte bezeichnet, die einen signifikanten Einfluss auf die Verformung des Sendepulses während der Propagation und der Reflexion innerhalb der Umgebung darstellen. Beispielsweise können auch erfasste Objekte ignoriert oder unterdrückt werden, die eine zu geringe Größe aufweisen, jedoch von einer Objekterkennung erfasst werden können, beispielsweise etwas weiter entfernte Masten. In diesem Sinne hat beispielsweise ein Mast mit einem Durchmesser von 10 cm mit einem Abstand von 10 m keinen Einfluss auf die Verformung des Sendepulses durch Reflexion, kann jedoch optisch erfasst werden. In diesem Fall wird trotz der optischen Auffassung das Objekt nicht berücksichtigt.

Die Fig. 2 zeigt eine erfindungsgemäße Vorrichtung zur Abschätzung der wandlerbezogenen Komponenten der Übertragungscharakteristik. Die Vorrichtung der Fig. 2 umfasst eine Objektklassifizierungseinrichtung 110 mit einem Eingang 112 für Bilddaten, beispielsweise einen Videoeingang. In einer bevorzugten Alternative ist jedoch der Eingang ein Eingang für Ultraschallsignale. Die Vorrichtung umfasst ferner eine Speichereinrichtung 120, mit der die Objektklassifizierungseinrichtung 110 verbunden ist. Die Objektklassifizierungseinrichtung ist eingerichtet, aus den Daten am Eingang 112 Merkmalsdaten über eine Verbindung 122 an die Speichervorrichtung 120 abzugeben. Die Merkmale, welche über die Verbindung 122 übertragen werden, geben Merkmale der Umgebung bzw. der dort vorgesehenen Objekte wieder, vorzugsweise lediglich diejenigen Objekte oder Umgebungsmerkmale, von denen anzunehmen ist, dass diese eine signifikante Auswirkung auf die Übertragungseigenschaften haben, die die Umgebung als Übertragungskanal vorsieht. In der Speichervorrichtung 120 ist eine Datenbank 130 gespeichert. Die Speichervorrichtung 120 umfasst ferner einen Ausgang 140, der zur Abgabe von Daten eingerichtet ist, die die Umgebungs-Übertragungsfunktion, das heißt die aus dem am Eingang 112 eingegebenen Daten geschätzten Parameter der Umgebungs-Übertragungsfunktion wiedergeben.

Die Datenbank 130 umfasst erste Einträge 132a, die Merkmale einer Umgebung oder Merkmale von Objekten dieser Umgebung wiedergeben. Die ersten Einträge 132a können als Parametersätze vorgesehen sein, wobei jeder einzelne Parametersatz Parameter verschiedener Kategorie umfasst, die zusammen ein Objekt klassifizieren, beispielsweise Größe, Nähe und die Struktureigenschaft (fest/weich, weit entfernt / nahegelegen oder durchgängig/aus einer Elementvielzahl bestehend). Die zweiten Einträge 132b der Datenbank geben umgebungsbezogene Komponenten der Übertragungscharakteristik wieder, vorzugsweise ebenso in Form eines Parametersatzes, beispielsweise als ein Satz von Stützpunkten. Die umgebungsbezogenen Komponenten der Übertragungscharakteristik der zweiten Einträge 132b können ferner wiedergegeben sein durch einen Parametersatz mit die Funktion kennzeichnenden Merkmalen wie Steigung, Anzahl von Flanken, usw. Als Stützpunkte der umgebungsbezogenen Komponenten der Übertragungscharakteristik 132b werden insbesondere lineare oder insbesondere logarhythmische diskrete Darstellungen des Frequenzverlaufs bezeichnet, das heißt diskrete Darstellungen mit komplexen Frequenzangaben oder mit deren Betrag oder Realteil. Die Zuordnung zwischen den ersten und zweiten Einträgen 132a, 132b wird vorgesehen beispielsweise durch eine Verknüpfung oder durch eine Listenplatzordnung. Die Zuordnung sieht vor, dass jeder der ersten Einträge einem zweiten Eintrag zugeordnet ist. Umgekehrt muss nicht jeder zweite Eintrag genau einem ersten Eintrag zugeordnet sein, sondern mehrere erste Einträge können mit dem gleichen zweiten Eintrag zugeordnet sein, wenn deren umgebungsbezogenen Komponenten der Übertragungscharakteristik vergleichbar sind, da die Objekte einen vergleichbaren Einfluss auf das Übertragungsverhalten innerhalb der Umgebung haben.

**Patentansprüche**

1. Verfahren zur Abschätzung von einem Transceiver zugeordneten Komponenten einer Gesamt-Übertragungscharakteristik, wobei der Transceiver zur Erfassung von Eigenschaften einer Umgebung eingerichtet ist, mit den Schritten:

Vorsehen eines Transceivers als Ultraschall-Wandler oder MikrowellenSender/Empfänger;
Senden eines Sendepulses (10) in die Umgebung mittels des Transceivers und Empfangen des in der Umgebung reflektierten Sendepulses als Empfangspuls (18) mittels des Transceivers, wobei dem Puls eine erste Gesamt-Übertragungscharakteristik zugeordnet wird, die zusammengesetzt ist aus Komponenten, die umgebungsbedingt sind und aus Komponenten, die dem Transceiver zugeordnet sind; und
Erfassen von zumindest einer Komponente der ersten Gesamt-Übertragungscharakteristik; und
Zuordnen der zumindest einen erfassten Komponente zu mindestens einer weiteren, d.h. anderer Komponente der ersten oder einer weiteren Gesamt-Übertragungscharakteristik, die sich aus dem Vergleich eines weiteren Sendepuls und des zugehörigen Empfangspuls ergibt, um umgebungsbedingte Komponenten zu bestimmen; und
Abschätzen der dem Transceiver zugeordneten Komponenten der Gesamt-Übertragungscharakteristik durch Eliminieren der der Umgebung zugeordneten Komponenten in der ersten oder in der weiteren Gesamt- Übertragungscharaktersik.

2. Verfahren nach Anspruch 1, wobei die erfasste Komponente und die mindestens eine weitere Komponente mit unterschiedlichen Einflußgrößen oder mit der gleichen Einflußgröße verknüpft sind, und wobei die erfasste Komponente und die weitere Komponente dem gleichen Sende-/Empfangspulspaar, d.h. der gleichen Gesamt-Übertragungscharakteristik angehören, oder wobei die erfasste Komponente und die weitere Komponente unterschiedlicheh Sende-/Empfangspulspaaren, d.h. unterschiedlichen Gesamt-Übertragungscharakteristika angehören.

3. Verfahren nach Anspruch 1 oder 2, **dadurch gekennzeichnet, dass** mittels einer Videokamera die Umgebung erfasst wird, um den Abstand zu einem Objekt und die Art eines Objekts zu ermitteln und die von der Videokamera erfasste Situation auf eine geschätzte Übertragungscharakteristik abgebildet wird, die mit der von dem Ultraschallwandler bzw. dem Mikrowellen-Sender/ Empfänger ermittelten Übertragungscharakteristik verglichen wird, um so einzelne Komponenten der Übertragungscharakteristik des Transceivers zu ermitteln.

4. Verfahren nach einem der Ansprüche 1 bis 3, **dadurch gekennzeichnet, dass** zum Zuordnen der erfassten Komponente zu mindestens einer weiteren Komponente eine Datenbank verwendet wird.

**5.** Verfahren zur Kalibrierung eines Transceivers, umfassend das Verfahren nach einem der Ansprüche 1 - 4, wobei der Transceiver anhand der dem Transceiver zugeordneten Komponenten der ersten Gesamt-Übertragungscharakteristik, die das Verfahren zur Abschätzung vorsieht, kalibriert wird.

**6.** Vorrichtung zur Abschätzung von einem Transceiver zugeordneten Komponenten einer Gesamt-Übertragungscharakteristik, gemäß dem Verfahren nach einem der Ansprüche 1-5, umfassend: eine Erfassungseinrichtung mit einem Eingang für einen Verlauf eines in der Umgebung reflektierten Pulses und optional einen Eingang für Bilddaten einer Umgebung, wobei die Erfassungseinrichtung eingerichtet ist, aus den an dem Eingang anliegenden Daten eine Komponente einer ersten Gesamt-Übertragungscharakteristik abzuleiten und dieser Komponente eine weitere Komponente der ersten oder einer weiteren Gesamt- Übertragungscharakteristik zuzuordnen, wobei die Vorrichtung ferner eine Kombinationseinrichtung umfasst, die eingerichtet ist, die dem Transceiver zugeordneten Komponenten der ersten Gesamt-Übertragungscharakteristik anhand der ersten oder weiteren Gesamt-Übertragungscharakteristik zu ermitteln.

**Claims**

**1.** Method for estimating components of an overall transfer characteristic which are assigned to a transceiver, the transceiver being set up to record properties of an environment, having the steps of:

> providing a transceiver as an ultrasonic transducer or microwave transmitter/receiver;
> transmitting a transmission pulse (10) into the environment by means of the transceiver and receiving the transmission pulse reflected in the environment as a reception pulse (18) by means of the transceiver, the pulse being assigned a first overall transfer characteristic which is composed of components which are environmental and components which are assigned to the transceiver; and
> recording at least one component of the first overall transfer characteristic; and
> assigning the at least one recorded component to at least one further, that is to say other, component of the first overall transfer characteristic or of a further overall transfer characteristic which results from the comparison of a further transmission pulse and the associated reception pulse in order to determine environmental components; and
> estimating the components of the overall transfer characteristic which are assigned to the transceiver by eliminating the components assigned to the environment in the first overall transfer characteristic or in the further overall transfer characteristic.

**2.** Method according to Claim 1, the recorded component and the at least one further component being linked to different influencing variables or to the same influencing variable, and the recorded component and the further component belonging to the same transmission/reception pulse pair, that is to say the same overall transfer characteristic, or the recorded component and the further component belonging to different transmission/reception pulse pairs, that is to say different overall transfer characteristics.

**3.** Method according to Claim 1 or 2, **characterized in that** the environment is recorded by means of a video camera in order to determine the distance to an object and the type of an object, and the situation recorded by the video camera is mapped to an estimated transfer characteristic which is compared with the transfer characteristic determined by the ultrasonic transducer or the microwave transmitter/receiver in order to thus determine individual components of the transfer characteristic of the transceiver.

**4.** Method according to one of Claims 1 to 3, **characterized in that** a database is used to assign the recorded component to at least one further component.

**5.** Method for calibrating a transceiver, comprising the method according to one of Claims 1-4, the transceiver being calibrated on the basis of the components of the first overall transfer characteristic which are assigned to the transceiver, which overall transfer characteristic is provided by the estimation method.

**6.** Apparatus for estimating components of an overall transfer characteristic which are assigned to a transceiver in accordance with the method according to one of Claims 1-5, comprising: a recording device having an input for a profile of a pulse reflected in the environment and optionally an input for image data relating to an environment, the recording device being set up to derive a component of a first overall transfer characteristic from the data applied to the input and to assign a further component of the first overall transfer characteristic or of a further overall transfer characteristic to this component, the apparatus also comprising a combination device which is set up to determine the components of the first overall transfer characteristic which are assigned to the transceiver on the basis of the first overall transfer characteristic or the further overall transfer characteristic.

## Revendications

1. Procédé d'estimation de composantes associées à un émetteur-récepteur d'une caractéristique de transmission globale, l'émetteur-récepteur étant conçu pour détecter des propriétés d'un environnement, comprenant les étapes suivantes :

   fourniture d'un émetteur-récepteur sous la forme d'un transducteur d'ultrasons ou d'un émetteur/récepteur d'hyperfréquences,
   envoi d'une impulsion d'émission (10) dans l'environnement au moyen de l'émetteur-récepteur et réception de l'impulsion d'émission réfléchie dans l'environnement sous la forme d'une impulsion de réception (18) au moyen de l'émetteur-récepteur, une première caractéristique de transmission globale étant associée à l'impulsion, laquelle se compose de composantes qui sont liées à l'environnement et de composantes qui sont associées à l'émetteur-récepteur ; et détection d'au moins une composante de la première caractéristique de transmission globale ; et

   association de l'au moins une composante détectée à au moins une composante supplémentaire, c'est-à-dire autre, de la première ou d'une autre caractéristique de transmission globale, laquelle résulte de la comparaison d'une impulsion d'émission supplémentaire et de l'impulsion de réception associée, afin de déterminer des composantes liées à l'environnement ; et estimation des composantes associées à l'émetteur-récepteur de la caractéristique de transmission globale par élimination des composantes liées à l'environnement dans la première caractéristique de transmission globale ou à la supplémentaire.

2. Procédé selon la revendication 1, la composante détectée et l'au moins une composante supplémentaire étant liées à des grandeurs d'influence différentes ou à la même grandeur d'influence, et la composante détectée et la composante supplémentaire appartenant à la même paire d'impulsions d'émission/réception, c'est-à-dire à la même caractéristique de transmission globale, ou alors la composante détectée et la composante supplémentaire appartenant à des paires d'impulsions d'émission/réception différentes, c'est-à-dire à des caractéristiques de transmission globales différentes.

3. Procédé selon la revendication 1 ou 2, **caractérisé en ce que** l'environnement est couvert au moyen d'une caméra vidéo afin de déterminer l'écart par rapport à un objet ainsi que la nature d'un objet et la situation détectée par la caméra vidéo est représentée sur une caractéristique de transmission estimée qui est comparée à la caractéristique de transmission déterminée par le transducteur d'ultrasons ou l'émetteur/récepteur d'hyperfréquences afin de déterminer ainsi des composantes individuelles de la caractéristique de transmission de l'émetteur-récepteur.

4. Procédé selon l'une des revendications 1 à 3, **caractérisé en ce qu'**une base de données est utilisée pour associer la composante détectée à au moins une composante supplémentaire.

5. Procédé d'étalonnage d'un émetteur-récepteur, comprenant le procédé selon l'une des revendications 1 à 4, l'émetteur-récepteur étant étalonné au moyen des composantes associées à l'émetteur-récepteur de la première caractéristique de transmission globale que prévoit le procédé d'estimation.

6. Dispositif d'estimation de composantes associées à un émetteur-récepteur d'une caractéristique de transmission globale conformément au procédé selon l'une des revendications 1 à 5, comprenant :

   un appareil d'acquisition muni d'une entrée pour une évolution d'une impulsion réfléchie dans l'environnement et, en option, une entrée pour des données d'image d'un environnement, l'appareil d'acquisition étant conçu pour dériver une composante d'une première caractéristique de transmission globale des données appliquées à l'entrée et pour associer à cette composante une composante supplémentaire de la première caractéristique de transmission globale ou d'une caractéristique de transmission globale supplémentaire, le dispositif comprenant en outre un appareil de combinaison qui est conçu pour déterminer les composantes de la première caractéristique de transmission globale associées à l'émetteur-récepteur au moyen de la première caractéristique de transmission globale ou de la caractéristique de transmission globale supplémentaire.

Fig. 1

Fig. 2

**IN DER BESCHREIBUNG AUFGEFÜHRTE DOKUMENTE**

**In der Beschreibung aufgeführte Patentdokumente**

- DE 19716680 C1